(19) Europäisches Patentamt
European Patent Office
Office européen des brevets

(11) **EP 1 879 131 A1**

(12) **EUROPEAN PATENT APPLICATION**
published in accordance with Art. 153(4) EPC

(43) Date of publication:
**16.01.2008 Bulletin 2008/03**

(51) Int Cl.:
**G06K 9/38** (2006.01)

(21) Application number: **06732153.9**

(22) Date of filing: **20.04.2006**

(86) International application number:
**PCT/JP2006/308295**

(87) International publication number:
**WO 2006/126348 (30.11.2006 Gazette 2006/48)**

(84) Designated Contracting States:
**DE FR GB**

(30) Priority: **02.05.2005   JP 2005134091**

(71) Applicant: **Calsonic Kansei Corporation
Tokyo 164-8602 (JP)**

(72) Inventor: **ARAI, Masatoshi
1648602 (JP)**

(74) Representative: **Dronne, Guy et al
Cabinet Beau de Loménie
158, rue de l'Université
75340 Paris Cédex 07 (FR)**

(54) **NUMBER RECOGNIZING DEVICE, AND RECOGNITION METHOD THEREFOR**

(57)   A number recognition device (1) includes a camera (2) for taking an image containing a number plate of a motor vehicle, and a ternarization processing part (32) for ternarizing the taken image by comparing it to circumjacent image elements and threshold values. Optimum predicted values are computed based on a brightness average and a brightness variance of the taken image, and a ternarization processing part (32) executes a ternarization process by using the predicted values of the threshold values.

FIG. 1

EP 1 879 131 A1

**Description**

[TECHNICAL FIELD]

The present invention belongs to a technical field of a number recognition device and a number recognition method for recognizing a number stamped on a number plate of a motor vehicle.

[Related Background Art]

In such a conventional art, as described in Satoshi Iwakata, Yoshiaki Ajioka, and Masafumi Hagiwara, "Character Extraction Algorithm from Scenery Images by Parallel and Local Processing." 2003 International Symposium on Advanced Intelligent System, pages 54-57, Sep. 2003, a classification process is carried out by using a logarithmic conversion in an image recognition process, because images varies due to changes in lightning in night and day and in all weather when the images are shot with an camera mounted on a motor vehicle.

[Disclosure of the Invention]

[Problem(s) To Be Solved By the Invention]

However, in the above known conventional technique, a problem in that usage of the logarithmic conversion process comes from the high price for this system because it requires a dedicated processor with high level computing power for making a very large computational effort.

The present invention is made to solve the above-described problem, and its object is to provide a number recognition device and a number recognition method which can implement an image classification process with high accuracy, without making a large computational effort like that in a case in which the logarithmic convention is used.

[Means For Solving the Problem(s)]

In order to solve the above-described problem, a number recognition device of a first aspect of the invention includes an imaging means for taking an image containing a number plate of another motor vehicle, an image processing means for ternarizing the taken image with a comparison of the taken image to circumjacent image elements in the image and to threshold values, and a threshold value predicting means for computing optimum predicted values of the threshold values based on a brightness average and a brightness variance of the taken image, wherein the image processing means is configured to execute a ternarization process (a ternary value process) with using the predicted values of the threshold values.

In a second aspect of the invention, a number recognition method is carried out in such a way that a color image, which is shot with an imaging means, is converted into a monochrome image with multiple gray-scale brightness, a brightness average and a brightness variance of the image are computed, an image element of the taken image is compared to circumjacent image elements thereof with using the brightness average and the brightness variance, threshold values are predicted through a comparison of the image element and the predicted threshold value so as to be used in a ternarization process for classifying the image element into white, black and achroma, and then a number plate is recognized based on ternary-value image data which is obtained through the ternarization process with using the predicted threshold value.

[Effects of the Invention]

In both first and second aspect of the inventions, a processor does not need a logarithmic conversion process, and accordingly a processor at lower price and with a relatively lighter performance can be employed compared to a processor necessary for the logarithmic conversion process. In addition, it can execute an image classification process with high accuracy.

[Brief Description of Drawings]

FIG. 1 is a schematic diagram showing a construction of a number recognition device of a first embodiment;
FIG. 2A is a diagram showing a correlation between a brightness average and a first threshold value f1, and FIG. 2B is a diagram showing a correlation between a brightness variance and the first threshold value f1;
FIG. 3A is a diagram showing a correlation between the brightness average and a second threshold value f2, and FIG. 3B is a diagram showing a correlation between the brightness variance and the second threshold value f2;

FIG. 4A is a view showing an image in a state where inner portions of frame lines of letters thereon are colorless, in a case in which an image of a number plate is taken at a close range, and FIG. 4B is a view showing an image in a state where the colorless inner portions are changed into a color image by executing a reduction process of the image in the case in which the image of the number plate is taken at the close range;

FIG. 5A is a diagram illustrating the image in a case where an object is recognized as white, based on a black and white judgment by using a ternarization process, and FIG. 5B is a diagram illustrating the image in a case where the object is recognized as black, based on the black and white judgment by using the ternarization process;

FIG. 6 is a diagram showing differences of processing results of the images which are ternarized in a bright case and in a dark case through three different processes which use the ternarization process;

FIG. 7 is a diagram illustrating a state in which a leftmost portion of an object number is searched;

FIG. 8A is a diagram illustrating a state in which a size of a number plate is estimated in a case where the object number is the first digit one, and FIG. 8B is a diagram illustrating a state in which the size of the number plate is estimated in a case where the object number is the third digit one;

FIG. 9A is a diagram illustrating a state of a fitting process for an arrangement regulation of the numbers on the number plate in a case where a number is at a designated position, and FIG. 9B is a diagram illustrating a state of a fitting process for the arrangement regulation of the numbers on the number plate in a case where the number is not at the designated position;

FIG. 10 is a diagram illustrating a state in which a template matching process is carried out; and

FIG. 11 A and FIG. 11B are diagrams illustrating examples for extracting a number in a dark state of lightning.

[BEST MODE FOR CARRYING-OUT OF THE INVENTION]

Hereinafter, a best mode, which realizes a number recognition device and a number recognition method of the present invention, will be described with reference to an embodiment.

[Embodiment]

First, a construction of the number recognition device of the embodiment will be described with reference to the accompanying drawings.

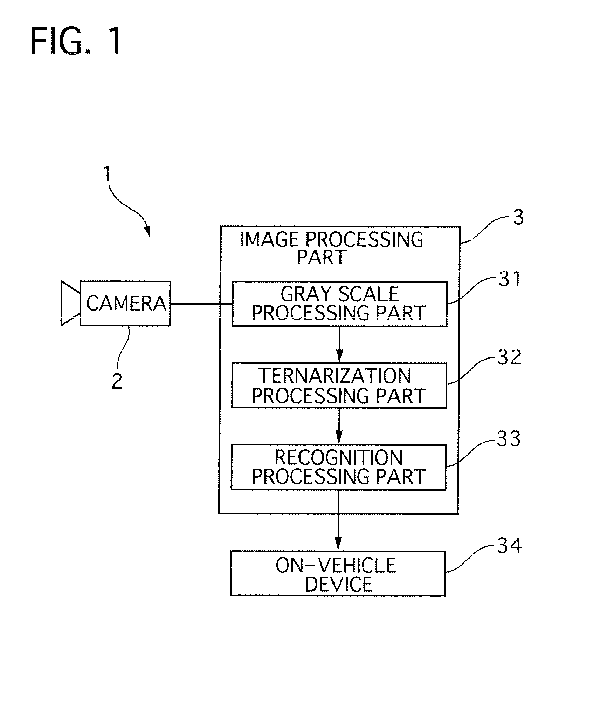

As shown in FIG. 1, the number recognition device 1 of the embodiment mainly includes a camera 2 for taking an image containing a number plate of another motor vehicle, and an image processing part 3 for processing image data taken by the camera 2. Incidentally, the camera 2 corresponds to an imaging means of the present invention. The number recognition device 1 is electrically connected to an on-vehicle device 4.

The camera 2 employs a CCD camera, which takes an image in 24 bit color and outputs an image data signal.

The image processing part 3 includes a gray scale processing part 3 1, a ternarization processing part 32 and a recognition processing part 33, and the part 3 processes the image data taken by the camera 2. Incidentally, the ternarization processing part 32 corresponds to an image processing means and a threshold value predicting means of the present invention, and the recognition processing part 33 corresponds to a pattern matching means of the present invention.

The gray scale processing part 31 converts the color image obtained by the camera 2 into a gray scale image with an 8 bit brightness value, namely white and black.

The ternarization processing part 32 classifies each image element of the gray scale image obtained by the gray scale processing part 31 into three colors, namely achromatic color, white and black, and then it generates ternarized image. In this classification of the ternarization, a first threshold value f1 is used for a judgment of white, and a second threshold value f2 is used for a judgment of black, then the first and second threshold values f1 and f2 being compared to each image element.

These first and second threshold values f1 and f2 are calculated by using the following equations.

$$f1 = C11 \times \text{brightness average} + C12 \times \text{brightness variance} + C13$$
$$\cdots \quad \text{(First Equation)}$$

$$f2 = C21 \times \text{brightness average} + C22 \times \text{brightness variance} + C23$$

$$\cdots \quad \text{(Second Equation)},$$

where C11, C12, C 13, C21, C22 and C23 are coefficients in the above-described prediction formulas.

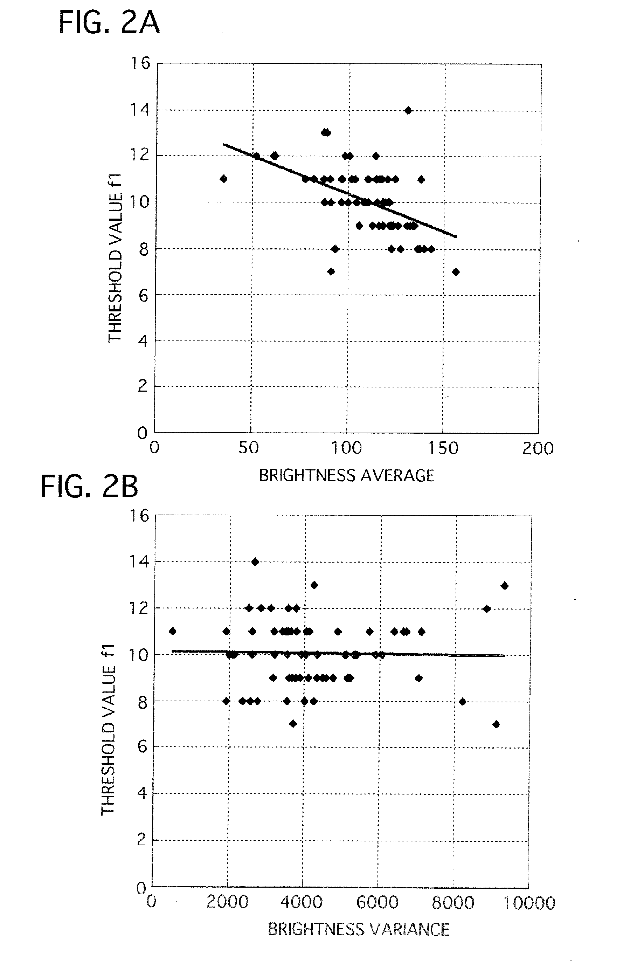

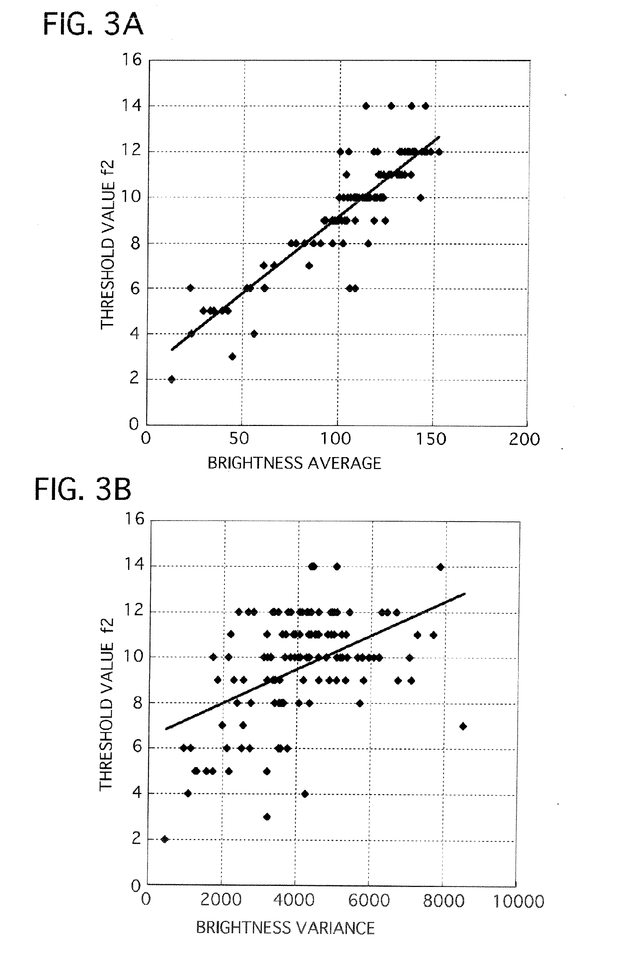

A correlation between the brightness average and the first threshold value f1 is shown in FIG. 2A, and a correlation between the brightness variance and the first threshold value f1 is shown in FIG. 2B. Further, a correlation between the brightness average and the second threshold value f2 is shown in FIG. 3A, and a correlation between the brightness variance and the second threshold value f2 is shown in FIG. 3B. In these drawings, experimental values and a straight line obtained by using multi regression analysis are indicated. Thus, the first equation and the second equation are calculated in advance by using an experimental test and the multi regression analysis.

The recognition processing part 33 executes a recognition process of letters and numbers stamped on the number plate by using the matching means, based on the ternarized image obtained by the ternarization processing part 32, then processing a recognition for the dimensions of the number plate.

The on-vehicle device 4 is employed for more comfortable usage of his or her motor vehicle, for example as a preceding vehicle following control system, using the number of another motor vehicle which is obtained by the number recognition device 1. Incidentally, the on-vehicle device 4 may compute a distance between his or her motor vehicle and a preceding motor vehicle based on the dimensions of the number plate.

Next, an operation of the number recognition device 1 of the embodiment will be described.
First, a recognition operation of the number plate will be described.
In the number recognition device 1 of the embodiment, in order to recognized a number of another motor vehicle, at first the camera 2 takes an image of the motor vehicle to obtain the color image thereof.

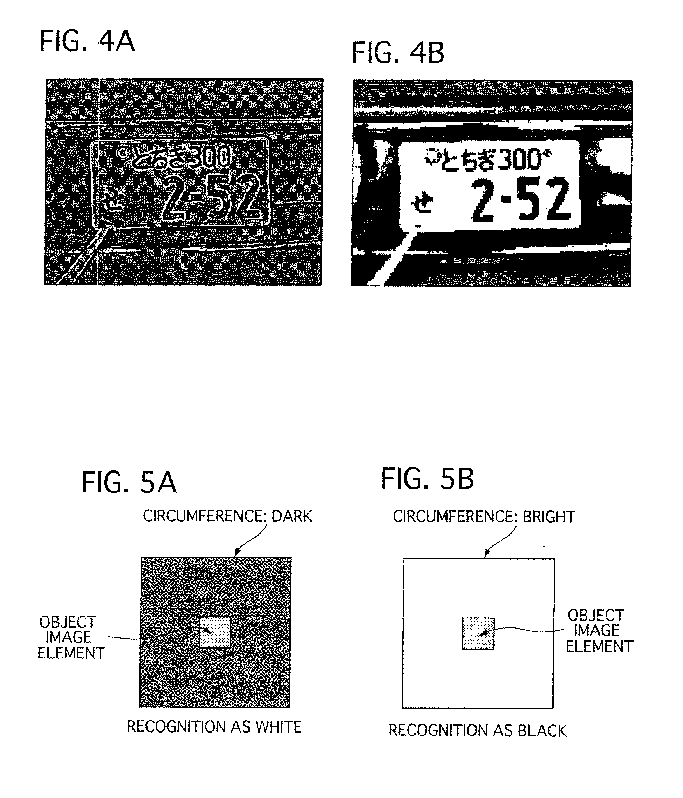

Next, the gray scale processing part 31 of the image processing part 3 converts the color image into a gray scale image, and then the ternarization processing part 32 generates a ternarized image based on the gray scale image. In a case where a number plate of which image is taken at a close range is recognized, inner portions of frame lines of the letters sometimes become colorless as shown in FIG. 4A in the following letter frame line extracting process, because the letter frame lines become too much wide. Compared to this, the device of the embodiment prevents the inner portions of the letter frame lines from being colorless by using an image reduction process of the image, as shown in FIG. 4B. In FIGS. 4A and 4B, the fourth digit number, namely the leftmost digit number, in the image is erased in order to protect privacy.

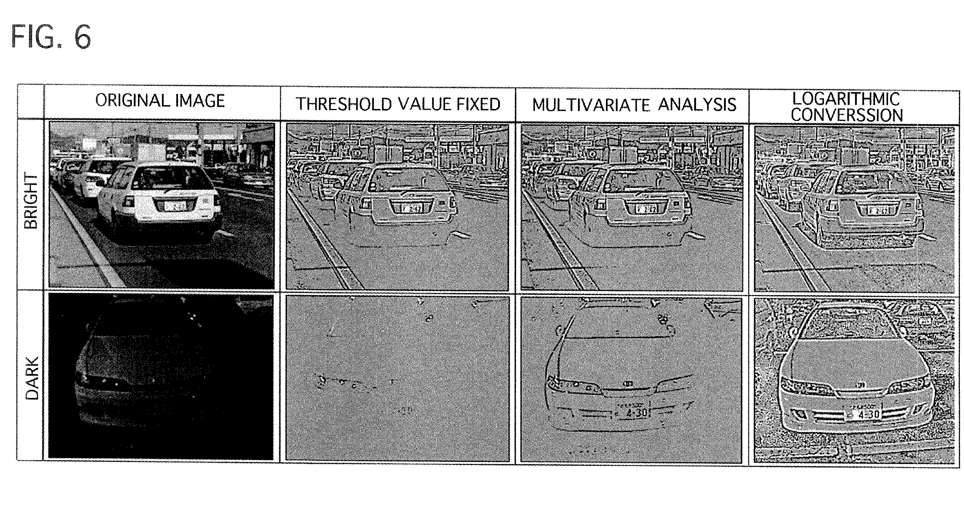

Herein, an explanation of the ternarization process will be given. FIG. 5A and FIG. 5B are diagrams illustrating a judgment of white and black in the ternarization process. As shown in FIG. 5A, an object image element is classified into white in a case where its circumjacent image elements are wholly darker relative to the object image element. On the other hand, as shown in FIG. 5B, an object image element is classified into black in a case where its circumjacent image element are wholly brighter relative to the object image element.
In this ternarization process, the first and second threshold values f1 and f2, which are obtained by using the first and second prediction equations, are used. The first and second equations use the brightness average and the brightness variance, where the brightness average is an average of a distribution of brightness data on the taken image, and the brightness variance indicates a data spread state of the distribution of the taken image. Consequently, the classification by using the ternarization process is capable of being carried out with high accuracy even when the data on the taken image is wholly bright or dark. In addition, the classification using the ternarization process is capable of being carried out with high accuracy, corresponding to the distribution of the data.

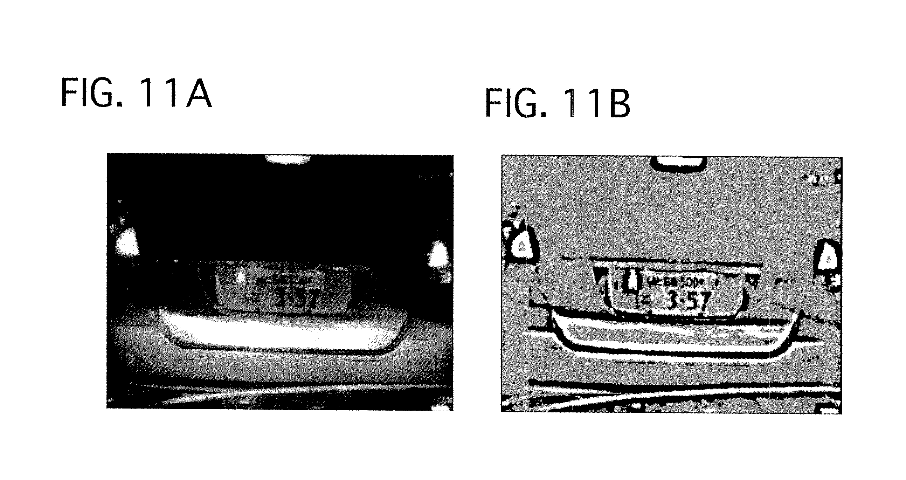

FIG. 6 is a diagram illustrating results of the ternarization image processes, which show differences between in a bright state case and in a dark state case, where the ternarization are differently processed from an other. Incidentally, in FIG. 6, a leftmost number in the four digit number is similarly erased from the image. FIGS. 11A and 11B show an example of an extracted number in the dark state. Similarly, the leftmost number of the four digit number is erased from the image in FIGS. 11A and 11B. In the ternarization processes of FIG. 6, original images, ternarized images when the threshold values are fixed ("THRESHOLD VALUES FIXED" indicated in the second column of FIG. 6), ternarized images obtained by using the threshold values of the first and second equations of the first embodiment ("MULTIVARIATE ANALYSIS" indicated in the third column of FIG. 6), and ternarized images obtained by using the logarithmic conversion process (indicated in the fourth column of FIG. 6), are each shown both in the bright state and in the dark state. As is clear from the results, the ternarized images obtained by using the first and second equations have sufficient qualities for reading the letters and the numbers on the number plate, although they generally have poorer qualities to be read than those using the logarithmic conversion. Therefore, the ternarization process, using the threshold values f1 and f2, of the embodiment can provide the letter frame lines that are necessary for reading the numbers and the letters on the number plate.

Herein, processing times are compared to each other between in a case where the logarithmic conversion is used and in a case where the prediction equations of the present embodiment are used. In the case where the logarithmic conversion, including time for computing dynamic threshold values, is used, its main process takes 23.34 ms and its supplemental process takes 3.25 ms, consequently the sum being 26.59 ms. On the other hand, in a case where the prediction equations of the embodiment are used, its main process takes 0.0072 ms and its supplemental process takes 6.37 ms, consequently the sum thereof being 6.38 ms even when it contains computation time of the brightness average and the brightness variance. Thus, the device of the embodiment can decrease to a great extent the computation time, relative to the case of the logarithmic conversion.

Next, a recognition process of the numbers on the number plate is carried out after the ternarized image is obtained.
The number recognizing process is carried out in such a way that the numbers are clipped out by using labeling and then an object is narrowed down by focusing feature quantities of an area, being followed by carry-out of pattern matching. Specifically, the feature quantities of the area are a height of the area, an aspect ratio thereof and an area of the letters accounted in a rectangle thereof. A purpose of narrowing-down of the objects according to the feature quantities is to decrease a computing load through a reduction in the number of the pattern matching.

The pattern matching is carried out in such a way that the object is normalized into 16 × 16 image elements and then a weighted index number histogram method is applied thereto. The weighted index number histogram method has an advantage in that it is excellently applicable to deformed letters, and accordingly it can be applied, to a certain extent, to an inclined number and a letter whose frame lines changes in width.
Herein, the weighted index number histogram method will be described. The feature quantities are taken by histogram obtained by counting components in outline directions of small areas, into which an inputted image is divided. In the embodiment, the components in the outline directions consisting only of a longitudinal direction and a lateral direction are counted, and no components in an oblique direction are counted, in order to decrease its processing load.

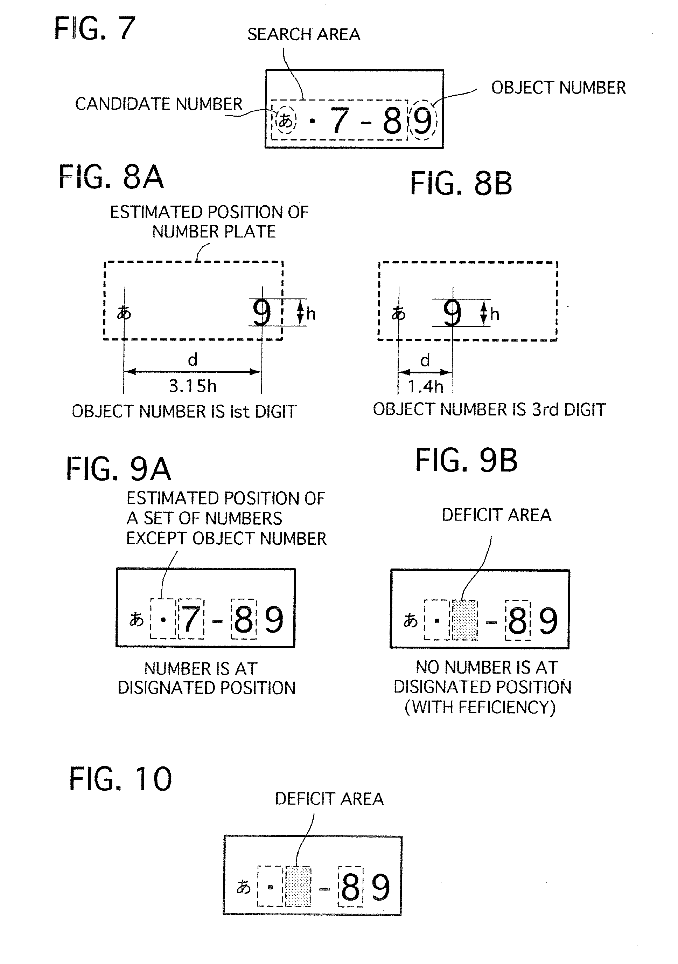

After the recognition process of the numbers has been executed, a recognition process of the number plate is carried out. In the embodiment, it uses arrangement regulations of the letters and numbers on the number plate.
First, as shown in FIG. 7, it searches whether or not a candidate letter, number or symbol "·" is located at an immediate left side of the object letter.

Next, as shown in FIG. 8A and FIG. 8B, a position and a size of the number plate is estimated according to a relationship between a position of the object letter and a position of the candidate letter. Incidentally, FIG. 8A shows a state in which the size of the number plate is estimated in a case where an object number is the first digit number, and FIG. 8B shows a state in which the size of the number plate is estimated in a case where the object number is the third digit number.

After the position and the size of the number plate is estimated, a search is carried out whether or not a previously searched candidate letter, number and symbol "·" can be fit to an estimated position except positions of a set of the object numbers. Incidentally, FIG. 9A shows a state of a fitting process for an arrangement of number plates in a case where the number is at a designated position, and FIG. 9B shows a state of the fitting process for the arrangement of number plates in a case where no number is at the designated position.

After the search, if deficit areas are equal to or less than two, a template matching process is carried out on the deficit areas as shown in FIG. 10.

The number of the motor vehicle is surely recognized through these processes. In addition, information on a distance to the motor vehicle can be obtained with high accuracy, since information on the size of the number plate can be obtained.

The number recognition device 1 of the embodiment can obtain the advantages listed below.

(1) In the number recognition device 1 including the camera 2 for taking the image containing the number plate of the other motor vehicle, and the ternarization processing part 32 for ternarizing the taken image by comparing it to the circumjacent image elements and the threshold value, the optimum predicted values of the threshold values are computed based on the brightness average and the brightness variance of the taken image, and then the ternarization processing part 32 executes the ternarization process by using the predicted values of the threshold values. Therefore, the device 1 can classify the image with high accuracy by carrying out relatively lighter process, not using the logarithmic conversion.
In addition, in the number recognition device 1 of the embodiment, its processing becomes lighter, with its processing time being appropriately one fourth of processing time necessary in the case of using the logarithmic conversion.

(2) The ternarization processing part 32 computes the threshold values by using the first equation and the second equation, where the first equation is expressed by (f1 = the coefficient C11 × the brightness average + the coefficient C12 × the brightness variance + the coefficient C13) and is used for determining the first threshold value f1 used in the case where the image element is judged as white, and the second equation is expressed by (f2 = the coefficient C21 × the brightness average + the coefficient C22 × the brightness variance + the coefficient C23) and is used for determining the second threshold value f2 used in the case where the image element is judged as black. Therefore, the ternarization process can be carried out by using the threshold values for which a brightness state of the image is allowed, and accordingly the classification process of the image can be carried out with higher accuracy.

(3) The first equation for computing the first threshold value f1 and the second equation for computing the second threshold value f2 are multi regression equations based on values sampled from a plurality of images. Therefore, the threshold values highly correlated to each other can be obtained based on previously obtained data, and accordingly the image classification process can be carried out with high accuracy when it is applied to actual usage.

(4) The pattern matching means is provided to recognize the number, the letter and the symbol stamped on the number plate by using the ternarized image data, where the pattern matching process the histogram, in which only the longitudinal components and the lateral components of the frame lines are counted, to obtain the feature quantities. It can nicely treat changes of widths of the letter frame lines and the inclinations of the numbers, and accordingly the device 1 can recognize the letter and the number with higher accuracy.

(5) The arrangement regulation referring means is provided to recognize the number, by comparing the numbers, the letters and the symbols, which are recognized, to those of the arrangement regulation of the number plate. Therefore, the number can be recognized by using the image processing and the arrangement regulation, and accordingly the letter and the number can be recognized with higher accuracy.

(6) The taken color image is converted into the monochrome image with multiple gray scale brightness, the brightness average and the brightness variance of the image are computed, the image element of the taken image is compared to the circumjacent image elements, the threshold values, which are obtained by the ternarization process of classifying the image element into white, black and achroma by comparing it to the threshold values, are predicted, the ternarization process is carried out by using the predicted threshold values f1 and f2, and the number plate is recognized based on the ternarized image data. Therefore, the image can be classified with high accuracy through relatively light processing without the logarithmic conversion, and accordingly it is possible to employ a processor at lower cost.

While the best mode of the present invention has been described above with reference to the embodiment, a concrete construction of the present invention is not limited to the embodiment and the invention contains modification and variation, such as design change, without departing from the spirit and the scope of the invention.

The number recognition device of the embodiment may be installed in an ETC system and others, and its usage is not limited to that described in this specification.

[INDUSTRIAL APPLICABILITY]

The number recognition device and the number recognition method of the invention are applicable to any one which recognizes a number of a number plate of a motor vehicle, such as an on-vehicle device for a preceding motor vehicle following control and others, and a ground equipment for ETC system and others.

**Claims**

**1.** A number recognition device comprising:

a imaging means for taking an image containing a number plate of a motor vehicle;

an image processing means for ternarizing the taken image by a comparison using threshold values and circumjacent image elements in the image; and
a threshold value predicting means for computing optimum predicted values of the threshold values based on a brightness average and a brightness variance of the taken image, wherein
the image processing means executes a ternarization process by using the predicted values of the threshold values.

2. The number recognition device according to claim 1, wherein
the threshold value predicting means computes the threshold values by using a first equation and a second equation, where the first equation is defined by (a first threshold value used in a case where an image element is judged as white) = (coefficient 1 × brightness average + coefficient 2 × brightness variance + coefficient 3) and the second equation is defined by (a second threshold value used in a case where the image element is judged as black) = (coefficient 4 × brightness average + coefficient 5 x brightness variance + coefficient 6).

3. The number recognition device according to claim 2, wherein
the first equation and the second equation are multi regression equations based on sample values from a plurality of images.

4. The number recognition device according to any one of claims 1 to 3, further comprising:

   a pattern matching means for recognizing a number, a letter and a symbol on a number plate based on a trenarized image obtained from the image, wherein
   the pattern matching means provides feature quantities based on histogram obtained by counting only longitudinal components and lateral components of frame line components.

5. The number recognition device according to claim 4, further comprising:

   an arrangement regulation referring means for recognizing a number of the number plate by referring the number, the letter and the symbol which are recognized to an arrangement regulation of the number plate.

6. A number recognition method comprising the steps of:

   converting an color image taken with an imaging means into a monochrome image with a multiple gray scale brightness;
   computing a brightness average and a brightness variance of the image;
   comparing an image element of the taken image to circumjacent image elements thereof by using the brightness average and the brightness variance;
   predicting threshold values for a ternarization process which is used for classification of the image element into white, black and anchromatic color by a comparing to the threshold values; and
   executing a ternarization process by using the predicted threshold values to recognize a number plate based on data of the ternarized image.

7. The number recognition method according to claim 6, wherein
the threshold value predicting means computes the threshold values by using a first equation and a second equation, where the first equation is defined by (a first threshold value used in a case where an image element is judged as white) = (coefficient 1 × brightness average + coefficient 2 × brightness variance + coefficient 3) and the second equation is defined by (a second threshold value used in a case where the image element is judged as black) = (coefficient 4 × brightness average + coefficient 5 × brightness variance + coefficient 6).

8. The number recognition method according to claim 7, wherein
the first equation and the second equation are multi regression equations based on sample values from a plurality of images.

9. The number recognition device according to any one of claims 6 to 8, further comprising:

   pattern matching is used for recognizing a number plate, where a trenarized image obtained from the image is processed so that only longitudinal components and lateral components of frame line components of a number, a letter and a symbol on the number plate are counted to obtain histogram corresponding to feature quantities.

**10.** The number recognition method according to claim 9, further comprising the step of :

recognizing a number of the number plate by referring the number, the letter and the symbol which are recognized to an arrangement regulation of the number plate.

# FIG. 1

1

IMAGE PROCESSING PART — 3

CAMERA

2

GRAY SCALE PROCESSING PART — 31

TERNARIZATION PROCESSING PART — 32

RECOGNITION PROCESSING PART — 33

ON-VEHICLE DEVICE — 34

# FIG. 2A

# FIG. 2B

## FIG. 3A

## FIG. 3B

FIG. 4A

FIG. 4B

FIG. 5A

CIRCUMFERENCE: DARK

OBJECT
IMAGE
ELEMENT

RECOGNITION AS WHITE

FIG. 5B

CIRCUMFERENCE: BRIGHT

OBJECT
IMAGE
ELEMENT

RECOGNITION AS BLACK

FIG. 6

| | ORIGINAL IMAGE | THRESHOLD VALUE FIXED | MULTIVARIATE ANALYSIS | LOGARITHMIC CONVERSSION |
|---|---|---|---|---|
| BRIGHT | | | | |
| DARK | | | | |

EP 1 879 131 A1

## FIG. 7

SEARCH AREA

CANDIDATE NUMBER

OBJECT NUMBER

あ ・7 - 8 9

## FIG. 8A

ESTIMATED POSITION OF
NUMBER PLATE

あ 9 ↕h

d
3.15h

OBJECT NUMBER IS lst DIGIT

## FIG. 8B

あ 9 ↕h

d
1.4h

OBJECT NUMBER IS 3rd DIGIT

## FIG. 9A

ESTIMATED POSITION OF
A SET OF NUMBERS
EXCEPT OBJECT NUMBER

あ ・7 - 8 9

NUMBER IS AT
DISIGNATED POSITION

## FIG. 9B

DEFICIT AREA

あ ・ - 8 9

NO NUMBER IS AT
DISIGNATED POSITION
(WITH FEFICIENCY)

## FIG. 10

DEFICIT AREA

あ ・ - 8 9

14

FIG. 11B

FIG. 11A

**INTERNATIONAL SEARCH REPORT**

| International application No. |
| --- |
| PCT/JP2006/308295 |

A. CLASSIFICATION OF SUBJECT MATTER
*G06K9/38*(2006.01)

According to International Patent Classification (IPC) or to both national classification and IPC

B. FIELDS SEARCHED

Minimum documentation searched (classification system followed by classification symbols)
G06K9/38

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2005-63055 A (Ricoh Co., Ltd.), 10 March, 2005 (10.03.05), Par. Nos. [0078] to [0081], [0103] to [0104] & US 2005/0031220 A1 | 1-10 |
| Y | JP 6-215293 A (Hitachi, Ltd.), 05 August, 1994 (05.08.94), Claim 1 (Family: none) | 1-10 |
| Y | JP 11-259642 A (Omron Corp.), 24 September, 1999 (24.09.99), Par. Nos. [0027] to [0031] (Family: none) | 1-10 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 15 May, 2006 (15.05.06) | Date of mailing of the international search report 30 May, 2006 (30.05.06) |
| --- | --- |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/308295 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 11-110486 A  (Mitsubishi Heavy Industries, Ltd.),<br>23 April, 1999 (23.04.99),<br>Par. No. [0030]<br>(Family: none) | 4,9 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SATOSHI IWAKATA ; YOSHIAKI AJIOKA ; MASAFUMI HAGIWARA.** Character Extraction Algorithm from Scenery Images by Parallel and Local Processing. *2003 International Symposium on Advanced Intelligent System,* September 2003, 54-57